(19) Europäisches Patentamt
European Patent Office
Office européen des brevets

(11) Publication number: 0 082 602 A2

(12) # EUROPEAN PATENT APPLICATION

(21) Application number: 82306282.3

(22) Date of filing: 25.11.82

(51) Int. Cl.$^3$: C 09 D 3/58
C 08 L 3/00, C 08 G 59/68
C 08 J 3/28, C 08 G 59/62

(30) Priority: 22.12.81 US 333366

(43) Date of publication of application: 29.06.83 Bulletin 83/26

(84) Designated Contracting States: BE DE FR GB IT NL

(71) Applicant: MOBIL OIL CORPORATION
150 East 42nd Street
New York New York 10017(US)

(72) Inventor: Guarino, John Phillip
71 Stonicker Drive
Lawrenceville New Jersey 08648(US)

(74) Representative: West, Alan Harry et al,
Mobil Court 3 Clements Inn
London WC2A 2EB(GB)

(54) **Pigmented epoxy coating compositions.**

(57) Electron beam curable coating compositions comprise a liquid epoxy resin, a titanium dioxide pigment, a glycol and a Group VIa onium salt cationic initiator.

EP 0 082 602 A2

# PIGMENTED EPOXY COATING COMPOSITIONS

This invention relates to $TiO_2$-pigmented epoxy resin compositions that are curable by electron beam radiation.

The present invention provides a coating composition comprising a liquid epoxy resin, titanium dioxide pigment, a glycol, and a Group VIa onium salt cationic initiator.

The epoxy resins used in the coating compositions of the invention are liquid compounds having more than one epoxy group, whether situated internally, terminally, or on a cyclic structure. They can be derived from various polyunsaturated structures, including animal and vegetable oils, esters, ethers, and butadiene derivatives. A large number of such epoxy resins and methods for preparing them are described in Chapters 2 and 3 of "Handbook of Epoxy Resins" by Lee and Neville, McGraw-Hill Book Company, New York (1967); commercially-available resins are described in Appendix 4-2 of that publication.

Particularly useful and readily commercially available epoxy resins are the diglycidyl ethers of bisphenols, for example the diglycidyl ethers of bisphenol A. Another useful class of epoxy resins is the epoxidized esters, for example 3,4-epoxycyclohexylmethyl-3,4- epoxycyclohexane carboxylate; 3,4-epoxy-6-methylcyclohexylmethyl-3,4-epoxy-6-methylcyclohexane carboxylate; and bis(3,4-epoxy-6-methylcyclohexylmethyl)adipate. Any of these epoxy resins may be used in the compositions of the invention, either alone or in combination with any one or more other epoxy resins. The epoxy resins used in the compositions of the invention preferably have an epoxy equivalent weight from about 75 to about 225.

The glycol component of the coating compositions of the invention is a liquid alkanediol or a liquid ether glycol or polyalkyleneglycol. Examples of alkanediols are ethylene glycol, propylene glycol, butylene glycol, pentanediol and hexanediol. Examples of polyalkylene glycols are diethylene glycol, triethylene

glycol, tetraethylene glycol, hexaethylene glycol, dipropylene glycol and especially tripropylene glycol.

The Group VIa onium salt cationic initiators used in the coating compositions of the invention are those described in U.S. Patent 4,058,401, that is to say compounds of the general formula:

$$\left[(R)_a(R^1)_b(R^2)_cX\right]^+_d \left[MQ_e\right]^{-(e-f)}$$

in which R is a monovalent aromatic group; $R^1$ is a monovalent aliphatic group selected from alkyl, cycloalkyl and substituted alkyl groups; $R^2$ is a polyvalent organic group forming a heterocyclic or fused ring structure selected from aliphatic and aromatic groups; X is a Group VIa element selected from sulfur, selenium and tellurium; M is a metal or metalloid; Q is a halogen; $a$ is zero or an integer from 1 to 3; $b$ is zero, 1 or 2; $c$ is zero or 1; the sum of $a + b + c$ is 3 or has the value of the valence of X; $d = e - f$; $f$ has the value of the valence of M and is an integer from 2 to 7; and $e > f$ and is an integer up to 8.

Groups R are, for example, $C_{(6-13)}$ aromatic hydrocarbon groups such as phenyl, tolyl, napthyl and anthryl, and such radicals substituted with from 1 to 4 monovalent groups such as $C_{(1-8)}$ alkoxy, $C_{(1-8)}$ alkyl, nitro, chloro and hydroxy; arylacyl groups such as benzoyl and phenylacyl; and aromatic heterocyclic groups such as pyridyl and furfuryl. Groups $R^1$ include $C_{(1-8)}$ alkyl, such as methyl and ethyl; and substituted alkyl such as $-C_2H_4OCH_3$, $-CH_2COOC_2H_5$ and $-CH_2COCH_3$. Groups $R^2$ include such structures as:

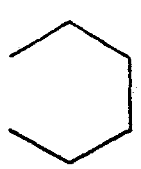 ; 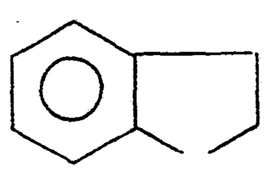 ;

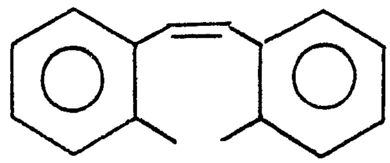
;

and

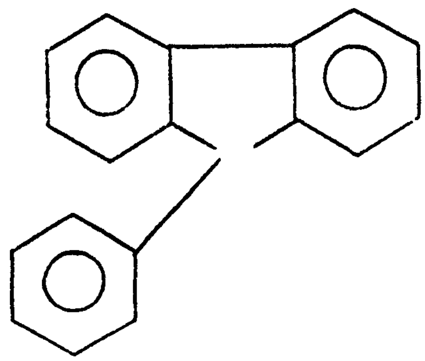

Examples of M are transition metals such as Sb, Fe, Sn, Bi, Al, Ga, In, Ti, Zr, Sc, V, Cr, Mn and Cs; rare earth metals such as the lanthanides, for example, Ce, Pr and Nd, and the actinides, such as Th, Pa, U and Np; and metalloids such as B, P and As.

Complex anions included by $[MQ_e]^{-(e-f)}$ are, for example, $BF_4^-$, $PF_6^-$, $AsF_3^-$, $SbF_6^-$, $FeCl_4^-$, $SnCl_6^-$, $SbCl_6$, $BiCl_5^{2-}$, $AlF_6^{3-}$, $GaCl_4^-$, $InF_4^-$, $TiF_6^{2-}$ and $ZrF_6^-$.

The coating compositions of the invention are pigmented with titanium dioxide. The compositions according to the invention suitably contain, on a weight basis, from 30 to 70%, preferably from 40 to 60%, epoxy resin; from 5 to 15%, preferably from 5 to 10%, glycol; from 25 to 60%, preferably from 30 to 50%, $TiO_2$ pigment; and from 1 to 10%, preferably 2 to 5%, cationic initiator.

The compositions of the invention may also include additives that are conventional in coating compositions, for example flow control agents and waxes. Especially suitable waxes include petroleum (paraffin) waxes, natural waxes such as montan wax, beeswax, and carnauba wax, and snythetic waxes such as polyethylene wax, and are preferably included as slurries or emulsions.

The coating compositions of the invention may be applied to a wide variety of substrates, for example metal, paper, leather and cloth using any of the usual methods of application, including wiping, spraying and rollcoat application. Suitable metallic substrates include aluminum, steel, and tin-plated steel. The compositions are generally applied at a rate of about 1.5 to 35 $g/m^2$. After application, the coating may be cured by exposure to electron beam radiation at a dosage of from about 50 to about 200 kGy.

Such electron beam radiation may be obtained from high energy electrons produced by a high voltage electron accelerator, a resonant transformer, a transformer rectifier, a micro-wave waveguide, a linear accelerator or a synchrotron.

Alternatively, the compositions can be cured in air or in an inert atmosphere, for example nitrogen. This is especially advantageous where the coating is applied to substrates that are traditionally difficult to render inert, such as beverage cans.

The following Example illustrates the invention.

In the Example, FC-508 is a Group VIa onium salt available from the 3M Company and believed to be triphenylsulfonium hexafluorophosphate, and ERL-4221 is 3,4-epoxycyclohexylmethyl-3-4-epoxycyclohexane carboxylate (from Union Carbide) and has an epoxy equivalent weight of 133.

## Example

In a high speed disperser, the following components were thoroughly mixed: 40 parts by weight rutile $TiO_2$, 3 parts by weight FC 508, 47.5 parts by weight ERL 4221, 9 parts by weight tripropylene glycol, and 0.5 parts by weight lubricant, until a fineness of grind of 7 or better was attained.

This composition, coated on aluminum, required 200 kGy of electron beam radiation for high conversion (99%+), but cured equally well in air or a nitrogen atmosphere.

CLAIMS:

1. A curable coating composition comprising a liquid epoxy resin, a titanium dioxide pigment, a glycol and a Group VIa onium salt cationic initiator.

2. The coating composition according to Claim 1, containing, by weight of the total composition, from 30 to 70 percent epoxy resin, from 5 to 15 percent glycol, from 25 to 60 percent titanium dioxide pigment, and from 1 to 10 percent cationic initiator.

3. A coating composition according to Claim 1, containing, by weight of the total composition, from 40 to 60 percent epoxy resin, from 5 to 10 percent glycol, from 30 to 50 percent titanium dioxide pigment, and from 2 to 5 percent cationic initiator.

4. A coating composition according to any one of Claims 1 to 3, wherein the epoxy resin is 3,4-epoxycyclohexylmethyl-3,4-epoxycyclohexane carboxylate and the glycol is tripropylene glycol.

5. A substrate coated with a coating composition according to any one of Claims 1 to 4 and cured by electron beam radiation.

6. A substrate according to Claim 5, wherein the substrate is metal.

7. A substrate according to Claim 6, wherein tne metal is aluminum.